# EUROPEAN PATENT APPLICATION

(11) **EP 0 874 248 A2**
(43) Date of publication of application: **28.10.1998**
(21) Application number: 98303206.1
(22) Date of filing: 24.04.1998
(51) Int. Cl.: G01S 5/14, H04Q 7/38

(54) **Rapid and precise geolocation of cellular telephones through the use of the GPS satellite system**

(30) Priority: 25.04.1997 US 842980
(71) Applicant: Lockheed Martin Corporation, King of Prussia, PA 19406 (US)
(72) Inventor: Myers, James Llewellyn, Jr., Paoli, Pennsylvania 19301 (US); Shaw, Stuart Chattan, Pottstown, Pennsylvania 19465 (US); McReynolds, Stephen Ralph, Devon, Pennsylvania 19333 (US); Pike, Laurence D., Manassas, Virginia 20109 (US); Lawrence, David, II, Manassas, Virginia 20112 (US)
(74) Representative: Goode, Ian Roy

(57) **Abstract**

A system to reduce the acquisition time necessary to access a GPS signal used to deterrffine the positional coordinates of a user associated with a wireless communications system. A wireless communications system can provide telephony and data service to mobile users throughout a large area. The wireless communications system provides transmissions and reception in a plurality of spotbeams or cells (17, 18, 19) comprising the large area. Each spotbeam or cell may be very large, up to 1500 km. in diameter for some satellite based systems, which precludes determining the subscribers precise location from his spotbeam ID or cell ID alone. With this invention, the wireless network broadcasts to user terminals within each spotbeam or cell, the GPS ID of all satellites that are visible within the zone along with Doppler and signal strength estimates for the visible GPS satellites. The user terminal (20) has a GPS receiver which is capable of receiving the C/A codes from the GPS satellites. The user terminal uses the broadcast GPS aiding data to quickly acquire the GPS C/A signals for all visible GPS satellites (14, 15, 16). The user terminal then returns the GPS C/A code measurements to the wireless network (24, 25, 11) which processes the measurements in conjunction with separate GPS data which it also receives to determine the users location. This precludes the user terminal from having to perform all the functions necessary to compute the geolocation. In this manner, the location of the user can be rapidly determined while reducing the cost of the user terminal.

## Description

This invention relates to a system which provides rapid geolocation of an end user's wireless terminal by a novel combination of Global Positioning System (GPS) technology with the prime wireless mode of the end user's terminal.

The GPS system is widely known and there are many publications which explain the entire operation. See for example, texts entitled Navstar Global Positioning System, published by Van Nostrand Reinhold 1992, New York by T. Logsdon and Understanding GPS Principles and Applications, by E.D. Kaplan; Artech House, 1996. See also an article entitled Mobile Satellite Communications by William Wu et al. proceedings of the IEEE, Vol.82, No. 9, September 1994, pages 1431-1466.

As one can ascertain, the GPS Global Positioning Satellite employs 21 satellites and three spares to continuously orbit the earth in 12 hour orbits inclined at about 55° to the equatorial plane and located approximately 10,898 nautical miles (20183 km) above the earth's surface. Four satellites are located in each of six orbital planes which intersect the earth's equator at 60° intervals. Each satellite broadcasts at two frequencies, 1575.42 MHz designated as L₁ and 1227.6 MHz designated as L₂. Both frequencies are modulated with a "P" code, "P" representing Precise or Protected. This frequency and code is used in US military operations and is not used within this application. The L₁ frequency is also modulated with the C/A or Clear (unencrypted) Acquisition code that is available to the public for civilian applications. The C/A code has a chipping rate of 1.023 Mb/s and a repetition interval of 1023 bits. It is also used to acquire the much longer "P" code and therefore is sometimes referred to as the "Course Acquisition" code. The C/A code is used to spread a 50bps data stream containing navigation data organized as five subframes of 6 seconds (300 bits) each for a total of 30 seconds. The C/A codes are unique for each satellite and have the specific characteristic that, when correlated with a C/A code replicate in exactly the correct phase, the modulo-2 bitwise addition will produce a large positive sum (up to 1023 theoretically), while any other code or the same code unsynchronized will produce a zero (or close to zero) sum. This sharp peak in the autocorrelation function is critical for GPS operation in which multiple satellites transmit on the same frequency without interference using this code division multiple access (CDMA) technique. A frame is comprised of five subframes containing: 1) clock correction and satellite quality, 2) and 3) satellite ephemeris data, 4) almanac, ionosphere and UTC corrections, and 5) almanac data.

Navigation data, superimposed on the codes by phase shift keying, are broadcast from each SV (satellite vehicle) at 50 bits per second. The navigation message data are divided into a number of time frames of different lengths. Twenty five frames of 30 seconds each create a superframe and contain a full set of all almanac data. Each subframe provides an telemetry word (TLNI) which contains an eight bit preamble for subframe synchronization, a "Hand Over Word" (HOW) containing timing data and the appropriate navigation data for the subframe.

As is well known, the GPS satellites broadcast signals that can be received by anyone with proper receiving equipment. The carrier must be down converted to baseband, the signal cross correlated and synchronized at the code, bit, subframe and frame level. In a typical GPS receiver, the first three messages must be decoded from at least 3 different satellites, at a minimum, to develop a GPS geolocation solution in two dimensions, assuming the third dimension is known. This processing is done at the receiver using typical software in addition to calculating the three dimensions of position (X, Y, Z). The GPS system operates on the principle of multilateration wherein a user determines the intersection of range measurements from the GPS signals. The range measurements are made simultaneously to separate GPS satellites all operating within the same basic frequency band given minor shifts due to the doppler associated with each satellite. Therefore, a receiver or user can determine and ascertain from the intersection, his location regarding latitude, longitude and altitude. As one is aware, the GPS satellites continuously move in orbit and therefore, the satellites are constantly changing in regard to the ground location. In addition, the health of the satellites and the basic ephemeris data changes, requiring updates and redistribution of data on a periodic rate. Apart from the brief description above, it is sufficient to say that there are numerous patents as well as articles written about the GPS system as wen as problems associated with the system.

In combination with the GPS system, there are other satellite based and terrestrial based wireless communication systems which perform different types of functions, including the transmission and reception of television signals, voice signals, communication signals and so on. Such wireless communications systems are also used to provide telephony service to mobile users. Cellular telephone systems are examples of terrestrial wireless telephony systems. Numerous satellite based telephony systems are under development; the assignee of the present application, namely the Lockheed Martin Company, has developed an example of a satellite based telephony system designated as the Mobile Satellite System (MSS). The MSS uses a geosynchronous spacecraft to provide telephony service to mobile users throughout a 30 million sq. km. coverage region. Due to the large coverage area of wireless communications systems (especially satellite based systems), it is desirable to have the capability to determine the location and country from which a mobile user is placing or receiving a telephone call. It is apparent that one can obtain the location of any user or any object using the above-noted GPS system. The conventional methods of using the GPS data to determine location requires from 15 seconds up to 20 minutes or more to perform the geolocation depending upon conditions. This is a function of the receiver, the propagation time and many other factors including the location of the GPS satellites with respect to the user geolocation. There are many different receivers which track GPS signals and correlate the requisite codes in a delay lock loop or other means. GPS receivers perform a coarse correlation operation for extracting the GPS signal and recovering the data. Thus, the actual processing time is a function of the receiver type and many other things. For example, the GPS system has disadvantages if one wants accurate coverage within a few meters or less. These disadvantages result from different factors such as uncertainty in propagation delays, uncertainty in the precise GPS satellite positions and so on. The precise satellite positions are necessary to determine effects and uncertainty in the accuracy of the timing information that provides the basis of the pseudoranges. In fact, there are induced errors intentionally associated with the CA signals available to the public because of the military consequences. This is known as "Selective Availability" or SA. Therefore, the United States Department of Defense prohibits certain accuracies to be achieved. While one can utilize GPS systems for accuracies of 100 meters or less, using differential GPs, one can not assure that the time to obtain geolocation information is sufficiently fast for use with mobile telephony services.

It is therefore an objective of this present invention to provide an improved system capable of reducing the time required to determine the geolocation of a user terminal utilizing GPS in conjunction with a second wireless application, an example of which could be a mobile telephony system utilizing space vehicles.

The essence of this invention is the partitioning of the GPS function between a fixed, ground based central site(s) and the user terminal acting as a remote sensor to enhance the geolocation capability of the user-terminal. In addition, the geolocation algorithm is improved by integrating additional geolocation knowledge (i.e. spot beam locations - areas on earth's surface illuminated by a communications antenna pattern) known by the central site which is unavailable to a standard GPS system receiver operating by itself.

The invention requires four essential elements of apparatus: (1) the Global Positioning System, which already exists and is operational; (2) a two-way wireless communications network, (3) a multi-mode receiver supporting both a GPS receiver function and the two-way wireless communication network at each user terminal; and (4) a central site that, in addition to communicating with the user terminals, dispatching voice or data, also includes one or more GPS receivers with differential capability and computer processing equipment.

A two-way radio distribution system is essential to achieve rapid GPS acquisition and high accuracy geolocation. This invention can be applied to several types of wireless communications networks, including but not limited to: (a) terrestrial based cellular networks, (b) Mobile Satellite Systems (MSSs), (c) aerial or balloon-based systems, etc.

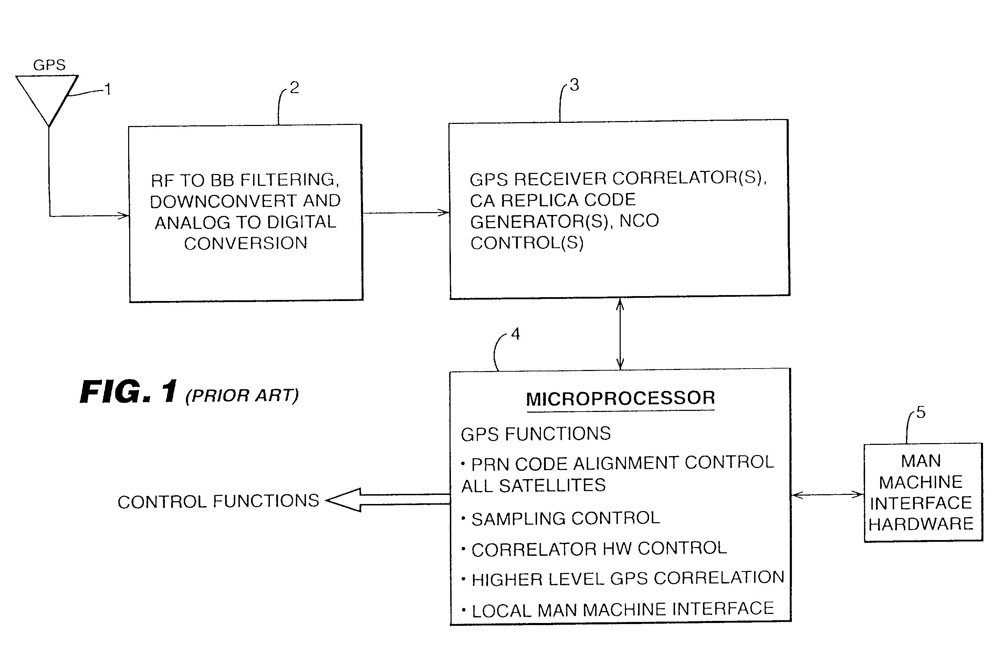

Figure 1 depicts a typical GPS C/A code receiver. The GPS receiver conventionally may be a single channel sequential or single channel multiplexed receiver or a concurrent multiple channel design. GPS receiver configurations are well known.

The GPS receiver performs the following functions:
1. Scans frequency space to detect GPS L1 frequency (although all GPS satellites broadcast on the same frequency, the frequency is Doppler shifted by an amount determined by the relative speed of the receiver with respect to the GPS satellite).
2. Detects the PRN (Pseudorandom noise) code (each GPS SV broadcasts on its own code; there are about 24 SVs; hence this involves a search).
3. Determine the C/A code phase errors and synchronize to the C/A code for each satellite.
4. Lock on the data message through bit synchronization.
5. Synchronize to a message using the GPS subframe preamble.
6. Read the data message to obtain the HOW (Handover word) and ephemeris message and clock corrections.
7. After a sufficient amount of data is collected, calculate the geolocation and time of the receiver.

In order to speed this process, the central site will maintain a data base of GPS satellites visible from each spatial area and compute aiding data to support the frequency search. This data may be provided to all terminals within the coverage area via unique broadcast data to each spatial area or may be provided on an as needed basis per user terminal using a dedicated user terminal to central site communication link. Providing this information to the user terminal significantly reduces the time required to accomplish steps 1 and 2. The user terminal will determine the C/A code phase errors (step 3) and if necessary, the bit synchronization (step 4). The C/A code phase and bit synchronization data, plus local timestamps, are returned to the central site which is not required to perform steps 6 because the data is already maintained as part of the database of GPS information. Step 7 is replaced with a procedure which solves the geolocation problem using partial pseudo-range data calculated from the information provided by the user terminal and ambiguity resolution algorithms.

The geolocation results can be used within the central facility for call routing and fee computation and/or can be returned to the user terminal for display to the user.

The above implementation supports rapid geolocation of a user terminal with very few user terminal resources (time, memory for almanac and ephemeris data, processing power) being required. The unique elements of this invention are:
1. The overall partitioning of functions between the user terminal and the central site,
2. The generation of the aiding data by the central site,
3. Hardware assist for precise and accurate timestamping of C/A code and bit synchronization within the user terminal, and
4. The geolocation ambiguity resolution algorithms used.

A method and apparatus in accordance with the invention will now be described , by way of example, with reference to the accompanying drawings, in which:-

Figure 1 illustrates a standard GPS C/A code receiver.

Figure 2 shows an example of a mobile satellite system in conjunction with a global positioning satellite system together with apparatus operating in accordance with the principles of this invention.

Figure 3 is a flow chart depicting Central Site Rapid Acquisition Aiding Data Processing.

Figure 4 is a more detailed diagram of a user terminal.

Figure 5 is a flow chart depicting Central Site Geolocation Calculation Processing.

### Invention Implementation

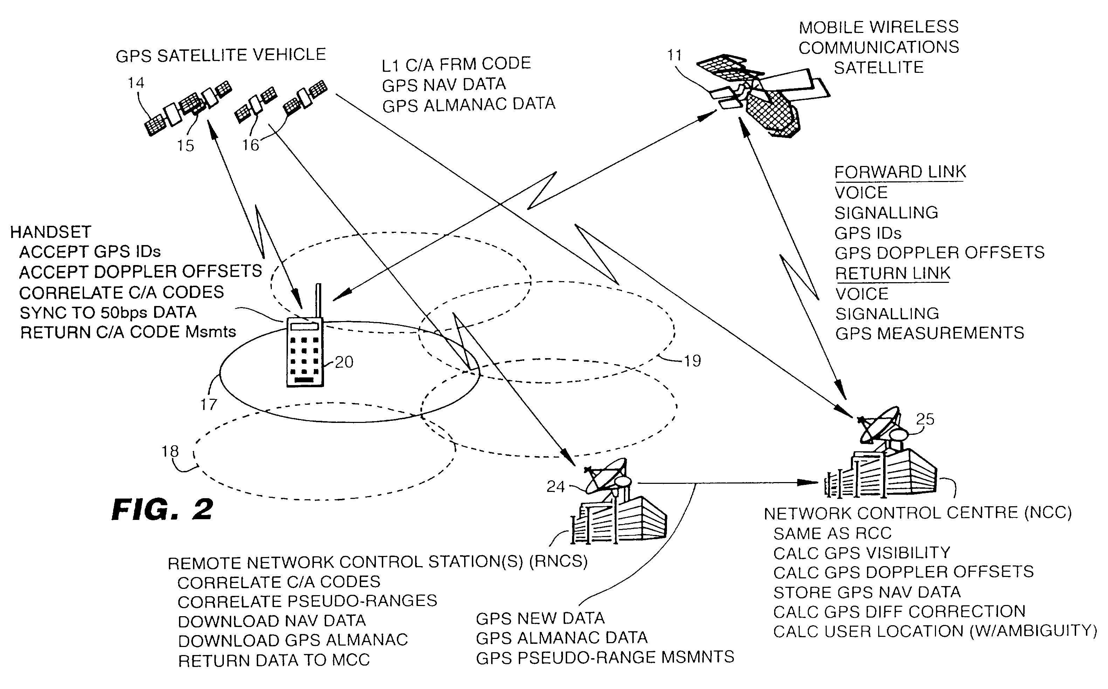

Referring to Figure 2 there is shown an example implementation of this invention using a satellite based wireless telephony communications system. The wireless communications system required to implement this invention can be terrestrial based, hot air balloon transponder based, or satellite based (Low Earth Orbit, Medium Earth Orbit or Geosynchronous Orbit). The wireless medium access control can be frequency division, time division or code division.

Within this example system the satellite designated by reference number 11 may be a plurality of satellites providing the point to point connection between the wireless Network Control Center (NCC) designated by reference number 25 and the user terminals represented by a telephone handset 20. The NCC may also be connected via satellite to other wireless Remote Network Control Stations (RNCS) designated by reference number 24. Normally, for frequency reuse purposes, the satellite produces a coverage area comprised of multiple spotbeams or cells as depicted by reference number 17, 18, and 19. These spotbeams can be quite large in the case of satellite systems, up to 1500 km in diameter. In terrestrial wireless networks, cellular towers would generate the spotbeams or cells and provide the connections between the control center and the user terminals. As indicated, due to the large coverage area afforded by wireless communication systems, it is desirable to have the capability to determine the location and country from which a mobile user, such as user 20, is positioned. While the wireless network can determine that user 20 is located in spotbeam area 17, due to the size of spotbeam area 17 it cannot determine the user's precise location or country. According to the present invention, the user terminal 20, which may be a mobile or cellular telephone, is equipped with apparatus to respond to and receive signals from the GPS satellite system. The GPS satellite system, as briefly described in the background of the invention, is the system now maintained by the U.S. government to provide navigational information.

GPS satellites 14, 15 and 16 are part of the 24 satellite constellation which have been launched according to GPS standards. As indicated above, each satellite in the constellation as 14, 15 and 16 has a unique C/A code. The C/A code has a chipping rate of 1.023 Mbps and repetition interval of 1023 bits. Each of the transmitting frequencies is in the L-band and coherently selected by multiples of a 10.23 MHZ clock. Thus, each of the transmitted frequencies from the GPS satellites are modulated either by a 10.23 MHZ clock rate and/or by a 1.023 MHZ clock in the case of the Clear/Acquisition or C/A signal. An innovation of the present invention is that the user terminal 20 acquires the GPS C/A codes and transmits the measurements back to the network via a transmission link between the user terminal 20 and the NCC 25. The NCC 25 then processes the GPS C/A code measurements to determine the user location. The NCC 25 maintains a database of current GPS navigation data through direct reception of the GPS signals by a GPS receiver in the NCC 25. This GPS navigation data is used along the GPS C/A code measurements received from the user terminal to calculate the user's position.

Another innovation of the present invention is that the NCC 25 broadcasts special GPS aiding data into each spotbeam (17, 18, and 19) using its GPS navigation database and knowledge of the spotbeam footprints. This precludes the user terminal 20 from having to maintain catalogues or read GPS navigation messages which are broadcast by GPS satellites 14, 15, and 16.The user terminal only needs to search for the GPSs indicated in the GPS aiding data broadcasts reducing the overall search time. In addition the GPS acquisition (signal lock-on time) is also greatly reduced by using the doppler and signal strength estimates in the broadcast GPS aiding data.

### Central Site Processing-Acquisition Aiding Data Computation

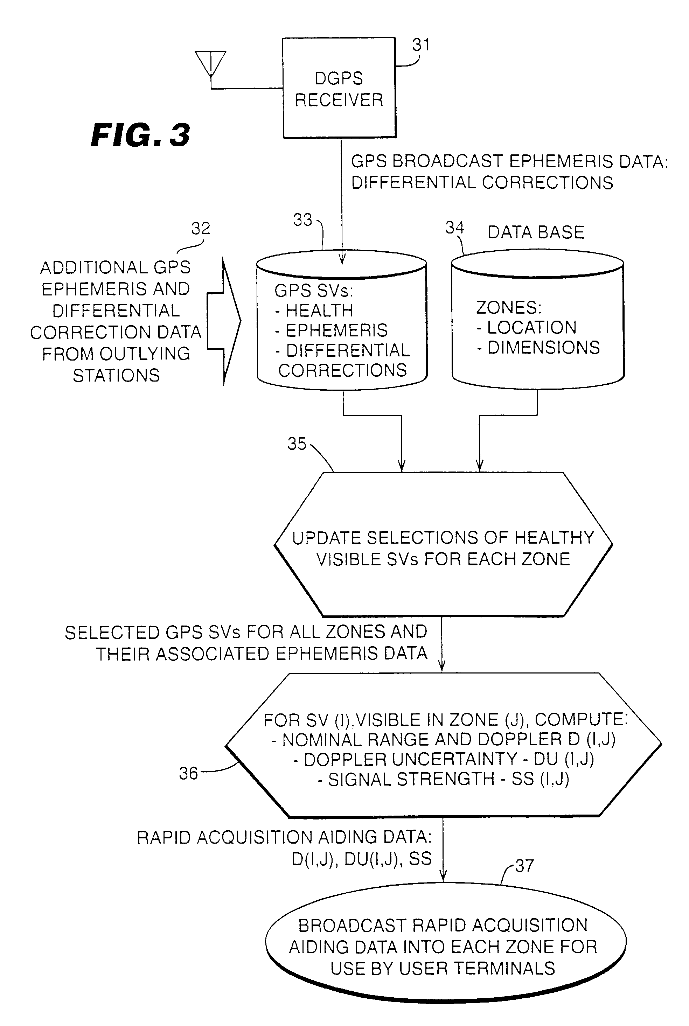

Figure 3 shows the data flow required for computing the Rapid Acquisition Aiding Data at the central site. A local commercially-available, multi-channel, differential GPS (DGPS) receiver 31 receives GPS SV broadcast health and ephemeds data on a continuous basis. The DGPS's antenna 31a is permanently mounted to a structure whose fixed location is determined by an accurate survey. As the DGPS receives ranging data from all visible SVs, the receiver also determines differential corrections to compensate for the intentional errors due to SA (Selective Availability) dither that may be present on the GPS signals.

Outlying stations of the wireless communications system also use DGPS receivers to provide similar, additional data 32 in regions that are geographically closer to user zones than the central site. These stations provide necessary differential corrections and more recent ephemeris data for their nearby zones than are available from the central site alone.

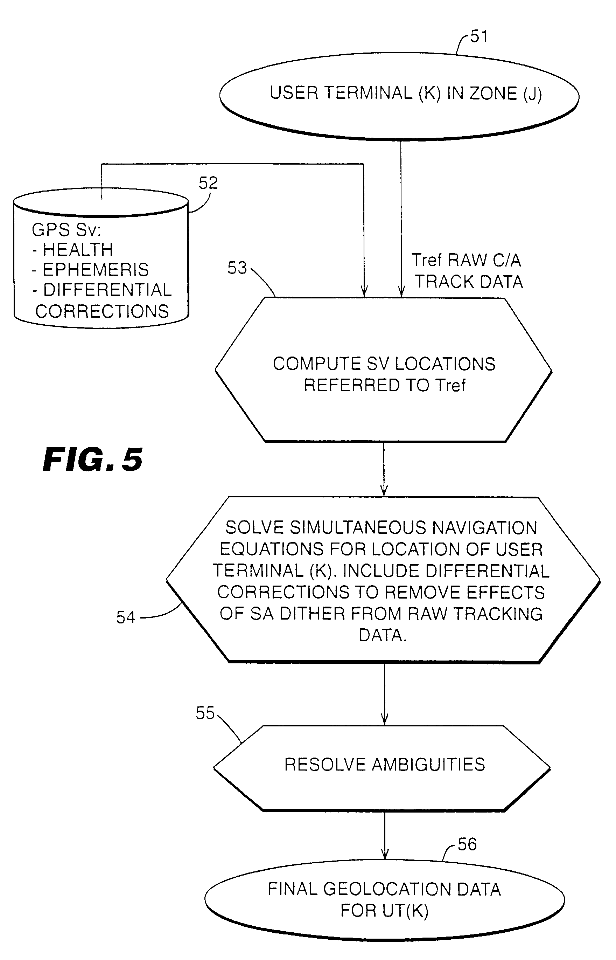

The broadcast data and differential corrections from local and outlying DGPS receivers are sent to the processor, where they are used to update GPS SV health and ephemeris information stored in storage means 33. These data are passed to process 35. The same database is also used later in the geolocation computation process depicted in Figure 5.

A database 34 stores geographical information on all zones used by the communication/geolocation system. Each zone's location and dimensions are stored in this data base. Over the duration of the network's operation, if zones are modified, added, or deleted, these changes can be input to this data base.

A software algorithm 35 uses the outputs from databases 33 and 34 to continually select visible SVs for each zone serviced by the network. This algorithm uses straightforward geometry, based on the computed elevation angles of SVs seen from each zone. Of these visible SVs, the algorithm computes the minimum Geometric Dilution of Precision (GDOP) for sets of four SVs. GDOP is a mathematical quantity commonly used in standard GPS receivers, is well understood, and is presented in the reference textbooks.

Software algorithm 36 is a key element of this invention. It takes the ephemeris data of the selected SVs from each zone and combines them with the geographic zone data stored in database means 34. The ephemeris data include 3-dimensional position and velocity components of each SV, relative to earth-fixed coordinates. The geographic zone data are converted to vectors of earth-fixed position. Vector differences between an SV and a zone center are used in the algorithm to compute slant range and the time rate of change of the slant range between the zone center and the SV. The range rate is converted to Ll Doppler shift data. Doppler uncertainty is computed based on the size of a given zone and the elevation angle to each SV. The algorithm also computes nominal signal strength based on SV range and elevation angle as seen from the center of the zone. For each SV(I) visible in a zone(J), algorithm 36 computes the nominal range, Doppler, Doppler uncertainty, and signal strength expected at the center of the zone. These data are updated on a regular basis, as the GPS constellation moves relative to each zone.

In algorithm 37 the aiding data, consisting of Doppler, Doppler uncertainty, and signal strength for selected SVs are then broadcast into each zone by the wireless conununications system for use by the User Terminals (UTs) 20.

### User Terminal GPS Satellite Acquisition and Code Lock Determination

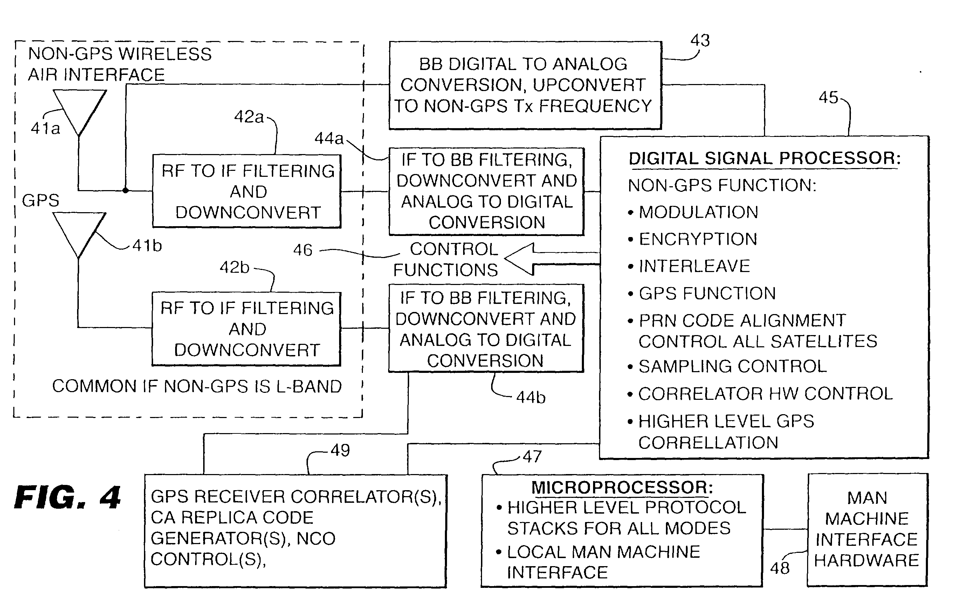

Figure 4 provides a simple block diagram of the apparatus 40 used within the user terminal 20. Items 41a, 42a, 43, 44a, 45, 46, 47 and 48 comprise the elements of a non-GPS wireless communication network interface (e.g. FDMA/TDMA digital cellular telephony application) . Items 41b, 42b, 44b, 49, 45, 46, 47 and 48 comprise the elements of a GPS receiver. If the non-GPS wireless system uses portions of the L-band of the radio spectrum in reasonable proximity to the GPS frequency of 1575.42 MHz, then it is possible to share the antenna, low noise amplifier, mixers and filters (items 41a, 42a and 41b, 42b) between the non-GPS RF to IF stage and the GPS RF to IF stage. Additional hardware in items 44a and 44b can be shared if the baseband channel bandwidth of the non-GPS and the GPS are compatible. GPS channel bandwidth for C/A coding is approximately 1 MHz. The Digital Signal Processor (DSP item 45), the microprocessor (item 47) and the man-machine interface hardware 48 are common between both modes.

In operation, assume that the user terminal has already established communication with the non-GPS wireless network via the non-GPS RF path through a communications satellite 11. Items 41a, 42a and 44a provide standard down conversion to baseband digital I and Q signals. The DSP 45 demodulates the signal, decrypts, deinterleaves and presents a buffer of data to the higher level protocol stacks in the microprocessor 47. The protocol stack implements the handshakes required by the non-GPS wireless network. As part of this invention, the specific pieces of data provided by the central site are:
1. the set of GPS satellites which should be in view ordered by those which will provide the best solution,
2. the estimated Doppler for each satellite, and
3. the uncertainty (in Hertz) associated with each Doppler estimate.

The estimated signal strength for each GPS satellite, based upon incident angle and range, can also be provided to improve performance, but will provide only marginal improvement in most cases beyond the basic algorithm.

The DSP 45 to Correlator 49 interface provides a mechanism for loading and controlling the GPS satellite PRN code replicas and the relative phasing of those codes to the input data stream in a similar manner to many commercial chip offerings today. The primary difference here is that the data provided by the central site allow the DSP 45 software to quickly acquire the appropriate GPS SV C/A code synchronization for a set of satellites in view.

The unique and novel element added to this implementation is in hardware which create and capture lock differential data simultaneously. As the PRN code replica for each GPS SV is aligned in time with the demodulated data stream received, a modulo 1023*N counter is initialized. This counter is synched to the system local clock such that a single clock cycle in the local clock will cause an increment of the modulo counter. The 'N' factor corresponds to the number of clock cycles which occur during a single C/A code chip sequence. A counter exists for each satellite being tracked simultaneously. In addition, a second set of counters are available for bit synchronization in a similar manner. Those counters are incremented once every rollover of a C/A code chip/partial chip counter. Upon command from an attached processor, which in our example user terminal is the DSP 45, the local time, the C/A code chip/partial chip counters and the bit counters are latched into a static set of registers simultaneously. This register set provides a snapshot of all related timing data simultaneously. The attached processor can then, at relative leisure, use the data to compute the C/A code phase differentials and bit synchronization differentials required by the central site. Each counter contains the time since the last event occurred. Therefore, since all the events are periodic, the time to the next event can be predicted or all values aligned as needed by the non-GPS air interface protocol stack. By computing what the local clock would be, at any of the satellite C/A code boundary points, all other times can be redefined as a delta to this time to give a partial pseudo-range measure. In a similar fashion, the bit counters can extend the correlation beyond a single C/A code time (1 ms) to the relationship of the individual signals to their bit boundaries. This data is referred to as T_{ref} and raw C/A track data by the central site ambiguity resolution process.

### Geolocation Computation

Figure 5 illustrates the geolocation processing sequence 50 at the central site. Beginning with step 51, a User Terminal(K) in Zone(J) sends GPS raw tracking data and the reference time of its measurement data to the central site.

The data base 52 of GPS constellation health and ephemeris data, is that database described for process 33 in Figure 3.

Process step 53 uses the latest GPS accurate ephemeris data from database 52 and the reference time and C/A data from step 51 to compute (step 54) the best estimated positions of the SVs at the time UT(K) obtained its measurements. These data may be adjusted slightly on an iterative basis, in step 55, if ambiguities must be resolved.

Process step 54 uses the nominal range data from process 36 and the C/A measurement data from step 53, and solves the four simultaneous equations for UT 3-dimensional position (i.e., latitude, longitude, altitude) and UT receiver clock bias as described in standard GPS references. Differential corrections from database 52 are added algebraically to the raw C/A tracking data to assure enhanced accuracy in these computations. In applications where the UT's altitude is well known, for example on the surface of the sea, then only three simultaneous equations need be solved, based on only three measurements, to produce the two-dimensional location solution (i.e., latitude and longitude).

If the UT GPS receiver has been designed to detect the FTF (Fundamental Time Frame= 20ms) bit rollovers in the GPS signals, it would also be designed to count the number of 1-ms cycles since the last rollover in each channel. This number is sent in addition to the C/A code lock raw data, and serves to remove any extra computations to remove ambiguities.

If the UT is not equipped with the bit rollover detector and C/A cycle counter, process 55 must sometimes be called to adjust for gross errors in the solution caused by the 1-millisecond ambiguity of the C/A code cycle. The simplest method to resolve the ambiguity involves a one-millisecond shift of the raw measurement data on the individual ranging measurement received from each SV and re-computing the solution in step 54. A valid solution must satisfy two criteria: (a) the location must be near the surface of the earth, (b) the location must lie within the boundary of the Zone(J) where the UT is located. For incorrect ambiguity intervals, violations of these criteria are easily detected by the algorithm. Several iterations may be required to obtain a solution that satisfies these criteria, but they can be accomplished very rapidly in the central site's computing facility.

Process 56 simply sends the final geolocation solution to the UT or on to other processes at the central site related to call routing, customer billing, emergency services dispatching etc.

## Claims

1. A method for obtaining geolocation data of a user terminal within a designated spatial area, the user terminal being part of a cellular network controlled by a central site for transmitting to and receiving from user terminals in that area, and a satellite positioning system for transmitting geolocation data, comprising the steps of
obtaining and processing information from the satellite positioning system at the central site to generate aiding data for said user terminal;
obtaining for processing at the usual terminal aiding data transmitted from the central site;
calculating precise timing and differential data at the user terminal using both (a) locally-obtained C/A code spread signal data from the satellite positioning system and (b) the aiding data from the central site;
obtaining for processing at the central site, the coarse location data and the timing and differential data from the user terminal; and
combining and processing data from the satellite positioning system, along with the coarse location data and timing and differential data from the user terminal, to provide an accurate indication of the location of the user terminal within the spatial area.

2. The method according to claim 1, wherein the satellite positioning system is the Global Positioning System (GPS).

3. The method according to claim 1, wherein the said cellular network is wireless.

4. The method according to claim 3, wherein the cellular network is at least one of: a Mobile Satellite System (MSS); a Base Transceiver Station(BTS) used with a terrestrial cellular network; and an Aeronautical Transceiver Station (ATS) used with a balloon based cellular network.

5. The method according to claim 1, wherein the user terminal is a Multi-mode Wireless Terminal (MWT), wherein one mode is the satellite positioning system and another mode is the cellular network.

6. The method according to claim 1, wherein aiding data is at least one of: identification of GPS satellites which should be within the field of view of the user terminal; Doppler frequency offset for each identified satellite; tolerance of the Doppler data for each identified satellite; estimated signal strength for each identified satellite; and GPS epoch relative to cellular network time.

7. The method according to claim 1, wherein the timing and differential data includes at least one of: a local timestamp for the all differential data received; a delta for each satellite acquired between the local timestamp and a first chip in the GPS Coarse Acquistion (C/A) code for the acquired GPS satellite, measured in whole and fractional chips; and a local time stamp corresponding to a point in the transmissions process after which all latency is predictable.

8. The method according to claim 7 wherein the timing and differential data further includes a delta for each satellite acquired between the local time stamp and the beginning of a data bit in the satellite positioning system message.

9. The method according to claim 1, further including the step of storing data indicative of a catalog of the latest GPS ephemeris at the central site.

10. The method according to claim 9 wherein the network has a plurality of spatial areas and further including the step of maintaining the catalog of the aiding data on a per spatial area basis.

11. The method according to claim 5 further including the steps of: calculating all possible three-dimensional geolocation solutions given the time and differential data provided by the MWT; and using the elevation of the resulting calculated geolocations to eliminate invalid solutions.

12. The method according to claim 11, further including the step of reducing the set of valid solutions to a single solution by determining which solution conforms to an identified bit synchronization differential.

13. Apparatus useable in a wireless cellular system for obtaining geolocation information from a geolocation satellite system to determine the location of a user within said cellular system, as monitored by an associated central site for receiving data from and transmitting data to a user terminal, comprising;
receiving means associated with said user terminal for receiving information both from a plurality of said GPS satellites, and from said cellular network;
means associated with each user terminal for processing said received information and for transmitting the processed information to said central site;
receiving means located at said central site for receiving said processed user terminal information and for receiving, processing and storing GPS data; and processing means located at said central site for generating aiding data, and including means for further processing received GPS data to provide accurate positional data indicative of the location of said GPS satellites in relation to said user terminal, and for transmitting said information to said user terminal to enable said user terminal to access said GPS system more rapidly.

14. The apparatus according to claim 13, wherein said GPS data received by the user terminal is correlated and synchronization is identified.

15. The apparatus according to claim 14, wherein an exact relationship between synchronization data is captured.

16. The apparatus according to claim 15, wherein said synchronization data is processed to include C/A code and bit synchronization information together with the time of measurement, prior to transmission from said user terminal to said central site.

17. The apparatus according to claim 13, wherein said information transmitted to said user terminal from said central site includes the GPS ID of all GPS satellites that should be visible by said user terminal.

18. The apparatus according to claim 13, wherein said information transmitted to said user terminal includes the GPS epoch relative to the central site's network time.

19. The apparatus according to claim 13, wherein said cellular system is a mobile satellite system.

20. The apparatus according to claim 13, further including storage means located at said central site for storing catalog information of the latest GPS ephemeris to be used in processing said GPS data.
